# EUROPÄISCHE PATENTSCHRIFT

(11) **EP 0 580 022 B1**
(45) Veröffentlichungstag und Bekanntmachung des Hinweises auf die Patenterteilung: **10.01.1996**
(21) Anmeldenummer: 93110909.4
(22) Anmeldetag: 08.07.1993
(51) Int. Cl.: C09C 1/00

(54) **Glanzpigmente auf Basis metalloxidbeschichteter Aluminiumplättchen mit einem Gesamtkohlenstoffgehalt unter einem Zehntel Gewichtsprozent**
Brilliant pigments based on aluminium platelets coated with metal oxide and with total carbon content lower than one tenth per cent weight
Pigments brillants à base de plaquettes d'aluminium revêtues d'oxyde métallique et de teneur globale en carbone inférieure à un dixième de pourcent en poids

(30) Priorität: 16.07.1992 DE 4223384
(43) Veröffentlichungstag der Anmeldung: 26.01.1994
(73) Patentinhaber: BASF Aktiengesellschaft, D-67063 Ludwigshafen (DE)
(72) Erfinder: Schlegel, Reinhold, D-6733 Hassloch (DE); Mronga, Norbert, Dr., D-6915 Dossenheim (DE); Rieger, Reinhold, D-6700 Ludwigshafen (DE)

(56) Entgegenhaltungen:
- EP-A- 0 571 836
- DE-A- 4 104 310
- DE-U- 9 207 357
- DATABASE WPI Week 8010, Derwent Publications Ltd., London, GB; AN 79-58972B & JP-A-54 081 337 (SHOWA ALUMINIUM) 28. Juni 1979
- FARBE + LACK Bd. 93, Nr. 12 , Dezember 1987 , HANNOVER, DE Seiten 973 - 976 W. OSTERTAG ET AL.

## Beschreibung

Die vorliegende Erfindung betrifft neue Glanzpigmente auf Basis metalloxidbeschichteter Aluminiumplättchen, bei denen die als Substrat dienenden Aluminiumplättchen einen Gesamtkohlenstoffgehalt < 0,1 Gew.-% haben.

Weiterhin wurde ein Verfahren zur Herstellung dieser Glanzpigmente sowie deren Verwendung zur Einfärbung von Lacken, Druckfarben, Kunststoffen, Gläsern, keramischen Produkten und Zubereitungen der dekorativen Kosmetik gefunden.

Nicht zuletzt wurden die Aluminiumplättchen mit einem Gesamtkohlenstoffgehalt < 0,1 Gew.-% als Vorprodukte für die erfindungsgemäßen Pigmente gefunden.

Metalloxidbeschichtete, insbesondere eisenoxidbeschichtete, Aluminiumpigmente sind an sich bekannt. Sie bestehen üblicherweise aus plättchenförmigen Substratteilchen aus metallischem Aluminium, die in der Regel größte Durchmesser von etwa 1 bis 200 µm und eine Dicke von etwa 0,1 bis 2 µm haben und mit einer Metalloxidschicht belegt sind.

Die optische Wirkung dieser Pigmente ergibt sich als Kombination der auf das metallische Substrat zurückzuführenden Eigenschaften, wie metallischer Glanz, Helligkeitsflop bei Betrachtung aus verschiedenen Blickwinkeln und Deckvermögen, und des durch die Oxidschicht hervorgerufenen Farbeindrucks. Handelt es sich bei der Oxidschicht um eine farbige (z.B. Eisenoxid-)Schicht, dann ergibt sich dieser Farbeindruck durch Überlagerung der Interferenzfarbe, die sich in Abhängigkeit von der Dicke der Oxidschicht ausbildet, und der jeweiligen Absorptionsfarbe.

Handelt es sich bei der aufgebrachten Metalloxidschicht um Hämatit (α-Fe₂O₃), so ergeben sich bei niedrigen Eisengehalten Pigmente mit grünlich-gelbem Farbton, der sich mit steigendem Eisengehalt (und entsprechend dickerer Oxidschicht) über gold, rotgold und orange nach tiefrot verändert. Da sich diese Pigmente prinzipiell durch Farbtonreinheit, hohes Deckvermögen und hohe Wetterechtheit auszeichnen, sind sie von besonderem Interesse für die Einfärbung von Lacken, Druckfarben und Kunststoffen.

Die bislang hergestellten metalloxidbeschichteten Aluminiumpigmente weisen bei ihrer Anwendung jedoch Nachteile auf, die nicht zuletzt durch die oftmals ungenügende Haftung der Oxidschicht auf dem metallischen Substrat hervorgerufen werden. So kommt es bei der Dispergierung in Bindemitteln aufgrund der damit verbundenen mechanischen Beanspruchung zu Metalloxidabrieb und daher zu unerwünschten Farbveränderungen. Teilweise sind auch in wäßrigen Bindemittelsystemen Gasentwicklung und bei längerer Lagerung Farbtonveränderungen zu beobachten.

Auch die bekannten Verfahren zur Herstellung dieser Pigmente vermögen nicht vollständig zu überzeugen. Zum einen zeigen die so erhältlichen Pigmente die obengenannten Nachteile, zum anderen bereitet die reproduzierbare Herstellung von Pigmenten gleicher Farbwerte, insbesondere derselben Farbsättigung (entspricht dem Chroma, C*-Wert des CIELAB-Systems), Schwierigkeiten.

Bei den in wäßriger Phase durchgeführten Verfahren, wie sie z.B. in den JP-A-81 337/1979 und 130 375/1986 beschrieben sind, besteht zudem die Schwierigkeit, daß die Aluminiumteilchen während der Beschichtung unter Entwicklung von Wasserstoff reagieren. Auch ist die Einhaltung bestimmter Reaktionsbedingungen, z.B. von pH-Werten, und der Einsatz teurer Hilfsmittel, z.B. von Komplexbildnern, erforderlich, und die Pigmente müssen nach der Beschichtung noch in aufwendiger Weise isoliert werden.

Auch die gegenüber den genannten Verfahren vorteilhafte Beschichtung des Substrats aus der Gasphase, die beispielsweise in der EP-A-33 457 beschrieben ist und bei der verdampfte Metallverbindungen in Gegenwart bewegter Substratteilchen oxidativ oder hydrolytisch zersetzt werden, zeigt zusätzliche Probleme. So ist während der Beschichtung eine Agglomeration der Teilchen zu beobachten, die zu einer Verringerung der Nutzfraktion aus Teilchen mit mittleren Durchmessern von in der Regel < 32 µm führt und die gleichmäßige Beschichtung aller Substratteilchen erschwert.

Der Erfindung lag daher die Aufgabe zugrunde, metalloxidbeschichtete Aluminiumpigmente zur Verfügung zu stellen, die die genannten Nachteile nicht aufweisen, und gleichzeitig auch ein Verfahren bereitzustellen, das die Herstellung dieser Pigmente in reproduzierbarer Weise kostengünstig ermöglicht.

Demgemäß wurden die Glanzpigmente auf Basis metalloxidbeschichteter Aluminiumplättchen gefunden, bei denen die als Substrat dienenden Aluminiumplättchen einen Gesamtkohlenstoffgehalt < 0,1 Gew.-% haben.

Außerdem wurde ein Verfahren zur Herstellung dieser Glanzpigmente gefunden, welches dadurch gekennzeichnet ist, daß man
a) die als Substrat dienenden, auf herkömmliche Weise hergestellten Aluminiumplättchen zur Senkung ihres Gesamtkohlenstoffgehalts unter 0,1 Gew.-% unter Bewegung mit einem sauerstoffhaltigen Gas und gewünschtenfalls zusätzlich mit Wasserdampf bei erhöhter Temperatur behandelt und
b) die so erhaltenen Aluminiumplättchen auf übliche Weise durch Gasphasenzersetzung flüchtiger Metallverbindungen mit Sauerstoff und/oder Wasserdampf mit Metalloxid beschichtet.

Weiterhin wurde die Verwendung dieser Glanzpigmente zur Einfärbung von Lacken, Druckfarben, Kunststoffen, Gläsern, keramischen Produkten und Zubereitungen der dekorativen Kosmetik gefunden.

Nicht zuletzt wurden die Aluminiumplättchen mit einem Gesamtkohlenstoffgehalt < 0,1 Gew.-% gefunden, welche durch Behandlung der auf herkömmliche Weise hergestellten Aluminiumplättchen gemäß dem in den Ansprüchen 3 bis 9 definierten Verfahrensschritt a) erhältlich sind.

Die erfindungsgemäßen Glanzpigmente zeichnen sich durch den niedrigen Gesamtkohlenstoffgehalt ihrer metallischen Substrate von < 0,1 Gew.-%, bevorzugt < 0,05 Gew.-%, besonders bevorzugt 0,04 Gew.-% aus. Eine untere Grenze für den Kohlenstoffgehalt gibt es im Prinzip nicht. Wesentlich zur Erzielung der gewünschten Eigenschaften ist nur, daß der obere Grenzwert von 0,1 Gew.-% nicht überschritten wird. In der Regel werden die Aluminiumplättchen einen Gesamtkohlenstoffgehalt im Bereich von etwa 0,01 bis 0,1 Gew.-% haben.

Der Gesamtkohlenstoffgehalt ist hierbei ein Maß für den Gehalt der Aluminiumplättchen an organischen Verunreinigungen.

Dabei handelt es sich in der Regel um Schmierstoffe, wie Öl oder Stearinsäure und Fettamine, die üblicherweise bei der Herstellung der Aluminiumplättchen durch Mahlung eingesetzt werden, um eine Kaltverschweißung der Plättchen zu verhindern. Nur so können auch die gewünschten dünnen Plättchen von < 1 µm Dicke kostengünstig erhalten werden. Verfahrensbedingt weisen diese Aluminiumplättchen also einen Restkohlenstoffgehalt von etwa 0,6 bis 1,5 Gew.-% auf. Auch Aluminiumplättchen, die durch Mahlung in einem organischen Lösungsmittel wie Schwerbenzin hergestellt wurden, zeigen diesen Kohlenstoffgehalt.

Bei den bekannten Verfahren zur Herstellung metalloxidbeschichteter Aluminiumpigmente wurden die Aluminiumplättchen keiner besonderen Reinigung unterzogen. Durch konventionelle Methoden wie Waschen mit organischen Lösungsmitteln und/oder Trocknen im Vakuum bei erhöhten Temperaturen kann der Gesamtkohlenstoffgehalt jedoch in der Regel nicht unter 0,5 Gew.-% gesenkt werden, weshalb die Pigmente nach der Beschichtung die obengenannte Nachteile zeigen.

Die Metalloxidschicht kann aus den üblicherweise für die Herstellung von Glanzpigmenten verwendeten hochbrechenden, farblosen oder farbigen Metalloxiden bzw. ihren Mischungen aufgebaut sein. Beispielsweise seien als bevorzugte Oxide Titan-, Zirkon-, Zinn- und Chromoxid genannt. Besonders bevorzugt ist wegen der resultierenden Farbeffekte Eisenoxid, insbesondere α-Fe₂O₃.

Gewünschtenfalls kann zusätzlich noch eine bevorzugt farblose Deckschicht aus Metalloxid aufgebracht werden. Neben den oben bereits genannten farblosen Metalloxiden sind für diese Beschichtung z.B. auch Siliciumoxid und Aluminiumoxid bzw. -hydroxid geeignet.

Die erfindungsgemäßen Glanzpigmente sind hochbrillant und farbstark, sie weisen bis zu 15 Chromaeinheiten höhere Farbwerte auf als die Pigmente nach dem Stand der Technik. Weiterhin zeichnen sie sich durch eine festhaftende Metalloxidschicht aus und zeigen bei Lagerung in wäßrigen und nichtwäßrigen Bindemittelsystemen erheblich höhere Farbtonkonstanz.

Die Glanzpigmente können vorteilhaft nach dem erfindungs gemäßen Verfahren hergestellt werden, bei dem die nach den oben beschriebenen, herkömmlichen Methoden erhaltenen Aluminiumplättchen mit Gesamtkohlenstoffgehalten > 0,5 Gew.-% zunächst in einem ersten Schritt a) einer reinigenden Behandlung unterzogen und anschließend in einem zweiten Schritt b) auf bekannte Weise mit Metalloxid beschichtet werden.

Das erfindungsgemäße Verfahren wird vorzugsweise in einem Wirbelschichtreaktor durchgeführt, in dem die Aluminiumteilchen mit Hilfe eines inerten Wirbelgases wie Argon oder vor allem Stickstoff fluidisiert (bewegt) werden und in das die jeweiligen Behandlungsgase eingeblasen werden und auf diese Weise die Metallteilchen umströmen. Insbesondere die Reinigung in Schritt a) kann jedoch auch in einer anderen, eine Durchmischung erlaubenden Apparatur, z.B. einem Drehkolben, vorgenommen werden.

In Schritt a) werden die Aluminiumteilchen bei erhöhter Temperatur mit einem sauerstoffhaltigen Gas und gewünschtenfalls zusätzlich mit Wasserdampf behandelt.

Die Verfahrensbedingungen werden dabei zweckmäßigerweise so ausgerichtet, daß sich die Aluminiumteilchen nicht entzünden.

Die Reaktionstemperatur beträgt daher in der Regel 150 bis 270°C, vorzugsweise 180 bis 220°C.

Als sauerstoffhaltiges Gas werden vorzugsweise solche Gemische eingesetzt, die einen Sauerstoffgehalt von 1 bis 5 Vol.-%, insbesondere 2 bis 4 Vol.-% aufweisen. Besonders bevorzugt sind Luft/Stickstoff-Gemische entsprechender Zusammensetzung. Bei Verwendung des bevorzugten Wirbelschichtreaktors wird soviel Luft eingeblasen, daß das Gemisch aus Wirbelgas und Luft den oben genannten Sauerstoffgehalt hat.

Die oxidierende Behandlung dauert im allgemeinen 2 bis 12 h.

Um Aluminiumplättchen mit besonders niedrigen Kohlenstoffgehalten von etwa < 0,05 Gew.-% zu erhalten, empfiehlt es sich, noch eine zusätzliche Behandlung mit Wasserdampf vorzunehmen. Diese wird vorzugsweise an die erste Behandlung mit dem sauerstoffhaltigen Gas allein angeschlossen. Der Wasserdampf kann aber auch von Anfang an miteingeblasen werden.

Zweckmäßigerweise geht man so vor, daß zusätzlich zu dem inerten Gas (Stickstoff) und der Luft noch soviel Wasserdampf zugeführt wird, daß das resultierende Gasgemisch einen Wasserdampfgehalt von in der Regel 0,5 bis 3 Vol.-%, bevorzugt 1 bis 2,5 Vol.-% aufweist.

Die Wasserdampfbehandlung dauert im allgemeinen 0,5 bis 1 h.

Die Gesamtbehandlung wird man solange durchführen, bis der gewünschte, unter 0,1 Gew.-% liegende Kohlenstoffgehalt erreicht ist.

Auf diese Weise werden sowohl physikalisch als auch chemisch an die Aluminiumoberfläche gebundene, organische Verunreinigungen entfernt. Die resultierende fettarme, hydrophile Oberfläche ist hervorragend zur Abscheidung haftfester Metalloxidschichten geeignet.

Die nachfolgende Belegung mit Metalloxid (Schritt b) wird auf bekannte Weise durch Gasphasenzersetzung flüchtiger Verbindungen der Metalle mit Sauerstoff und/oder Wasserdampf vorgenommen und erfolgt, wie z.B. in der EP-A-33 457 beschrieben, ebenfalls vorzugsweise in einem Wirbelschichtreaktor. Das gereinigte Aluminiumsubstrat muß also nicht erst ausgetragen werden, sondern kann vorteilhaft direkt, gegebenenfalls nach Abkühlen auf die gewünschte Reaktionstemperatur, in demselben Reaktor beschichtet werden.

Eine gewünschte zusätzliche Metalloxiddeckschicht kann ebenfalls direkt an die erste Belegung z.B. mit Eisenoxid aufgebracht werden.

Als Metallverbindungen eignen sich die üblicherweise für diesen Zweck eingesetzten und beispielsweise in der älteren deutschen Patentanmeldung P 42 17 511.9 aufgeführten Verbindungen wie die Carbonyle, Halogenide, insbesondere Chloride, und Alkoholate. Im einzelnen seien z.B. genannt: Titan-, Zirkon-, Silicium- und Zinntetrachlorid, Aluminiumchlorid, Titan-n- und -isopropanolat, Chromhexacarbonyl und bevorzugt Eisenpentacarbonyl.

Die Carbonyle werden zweckmäßigerweise durch Sauerstoff im Gemisch mit Stickstoff oxidiert, während die Halogenide und Alkoholate durch Wasserdampf hydrolysiert werden, wobei im Fall der Halogenide Sauerstoff anwesend sein kann.

Dabei geht man zweckmäßigerweise so vor, daß man verdampfte Metallverbindung und jeweiliges Reaktionsgas (Sauerstoff bzw. Luft und/oder Wasserdampf) bei einer Temperatur > 100°C, bevorzugt bei 150 bis 300°C, in die durch Fluidisierung der Aluminiumteilchen mit dem Wirbelgas (in der Regel Stickstoff) gebildete Wirbelschicht einbläst, wobei die Menge an verdampfter Metallverbindung im allgemeinen nicht mehr als 5 Vol.-%, vorzugsweise nicht mehr als 2 Vol.-% der Gesamtgasmenge im Reaktor betragen sollte.

Mithilfe des erfindungsgemäßen Verfahrens können die vorteilhaften Glanzpigmente mit niedrigen Kohlenstoffgehalten in einfacher Weise und, unabhängig von der jeweils eingesetzten Aluminiumcharge, reproduzierbar hergestellt werden. Außerdem wird bei erfindungsgemäßer Vorgehensweise eine gleichmäßige Beschichtung nahezu aller Substratteilchen (in der Regel 98 bis 99 % der Teilchen) erreicht. Eine Agglomeration der Pigmentteilchen ist ebenfalls nicht zu beobachten; wird beispielsweise ein Aluminiumpigment mit erfindungsgemäßem Gesamtkohlenstoffgehalt von 0,04 Gew.-% und mittlerem Teilchendurchmesser von 13,8 µm mit Fe₂O₃ bis zu gelbgoldener Farbe beschichtet, dann vergrößert sich der mittlere Teilchendurchmesser nur auf 15,1 µm, und der nutzbare Feinanteil < 32 µm verringert sich nur geringfügig von 99,0 % auf 98,6 %.

Die erfindungsgemäßen Glanzpigmente eignen sich vorteilhaft für viele Anwendungszwecke, insbesondere zur Einfärbung von Lacken, Druckfarben und Kunststoffen.

### Beispiele

Zur Herstellung der eisenoxidbeschichteten Aluminiumpigmente wurde ein doppelwandiger, ölbeheizter Wirbelschichtreaktor aus Edelstahl verwendet, der aus 3 Teilen bestand:
1. einem mittleren, zylindrischen Teil mit einem Durchmesser von 30 cm und einer Höhe von 1,5 m;
2. einem unteren, konusförmigen Teil, dessen Durchmesser sich in 50 cm auf 5 cm verjüngte, mit einem Wirbelgasanschluß, einer Düse zur Carbonyleinleitung und einem Pigmentauslaßstutzen;
3. einem oberen Deckelteil mit 4 eingearbeiteten, über eine Jet-Vorrichtung mit Stickstoffpulsen abzureinigenden Filterstrümpfen und einem Pigmenteinfüllstutzen.

Zur Beurteilung der Koloristik der erhaltenen Pigmente wurden jeweils 4 g der Pigmentproben in 96 g eines Polyester-Mischlackes mit 21 Gew.-% Feststoffanteil (eingestellt auf eine Auslaufzeit von 35 sek DIN Becher 4 durch Verdünnen mit Butylacetat) eingesetzt und 15 min mit einem Propellerrührer (IKA-Rührwerk, Fa. Janke und Kunkel) bei 1 500 U/min dispergiert.

Die pigmentierenden Lacke wurden dann mit einem elektromotorischen Filmziehgerät (Fa. Braive Instruments) auf der beschichteten Seite eines weißen Chromolux-Kartons (700/350 g, Größe 30x45 cm) mit einer 200 µm-Kastenrakel (Fa. Erichsen, Typ 335, Breite 25,5 cm) und einer Geschwindigkeit von 10 mm/sec abgerakelt. Nach einer Ablüftzeit von 20 min bei Raumtemperatur wurden erneut 200 µm abgerakelt und ebenfalls 20 min abgelüftet. Anschließend wurde der Karton 30 min bei 90°C eingebrannt.

Die Messung der CIELAB-Werte erfolgte in Rakelrichtung auf dem Mittelteil der Abrakelung mit einem DATACOLOR Spektralphotometer MSC 111 mit Metallic-Meßkopf GK 111 bei einer Winkeldifferenz von 20 bis 70° zum Glanzwinkel. Die Angaben der Helligkeit L, des Farbwinkels H* und des Chromas C* beziehen sich auf die Normlichtart D65 und einem Betrachtungswinkel von 25°, 45° und 70°.

### Beispiel 1

a) In den Wirbelschichtreaktor wurden 8 kg Aluminiumpigment (mittlerer Teilchendurchmesser 19 µm, spezifische BET-Oberfläche 3,6 m/g, Kohlenstoffgehalt 1,2 Gew.-%) unter Verwirbelung mit 8,2 m³/h Stickstoff auf 190°C erhitzt. Anschließend wurden dem Wirbelgas zunächst 1,2 m³/h Luft und nach 10 h zusätzlich noch 600 ml Wasser in Form von Wasserdampf in 1 h zugemischt.
   Eine Probe des so behandelten Aluminiumpigments hatte einen Kohlenstoffgehalt von 0,07 Gew.-%.
b) Anschließend wurden über die Carbonyldüse zusätzlich 600 g/h verdampftes Eisenpentacarbonyl in einem Trägergasstrom von 850 l/h Stickstoff zugeführt. Nach Eintrag von 6 000 g Fe(CO)₅ wurden Carbonyl-, Luft- und Wasserdampfzufuhr abgestellt.
   Nach dem Abkühlen wurden 10,33 kg goldfarbenes Fe₂O₃-beschichtetes Aluminiumpigment mit einem Eisengehalt von 16,5 Gew.-% und einem Kohlenstoffgehalt von 0,03 Gew.-% erhalten (Ausbeute 98,9 %). Das Pigment hatte eine Siebausbeute < 32 µm von 90 %. Unter dem Lichtmiskroskop waren nur sehr vereinzelt noch unbelegte Aluminiumteilchen zu erkennen. Die koloristischen Daten des Pigments sind in der unten folgenden Tabelle aufgeführt.

### Vergleichsbeispiel V

Analog Beispiel 1 wurden 8 kg des Aluminiumpigments, jedoch ohne Vorbehandlung, direkt bis zum Erreichen eines goldenen Farbtons mit Eisenoxid beschichtet. Dafür wurden 5 500 g Fe(CO)₅ benötigt.

Es wurden 10,06 kg goldfarbenes Fe203-beschichtetes Aluminiumpigment mit einem Eisengehalt von 15,3 Gew.-% und einem Kohlenstoffgehalt von 0,25 Gew.-% erhalten (Ausbeute 92,2 %). Das Pigment hatte eine Siebausbeute < 32 µm von nur 65 %. Die lichtmikroskopische Untersuchung ergab, daß 5 % der Metallflakes nicht belegt waren und silberne Farbe zeigten. Die koloristischen Daten des Pigments sind in der folgenden Tabelle aufgeführt.

**Tabelle**

| Koloristische Daten | | | | |
|---|---|---|---|---|
| Bsp. | Meßgeometrie | Helligkeit L | Farbwinkel H* | Chroma C* |
| 1 | 25° | 87,6 | 73,7 | 72,6 |
| | 45° | 47,5 | 73,0 | 47,1 |
| | 70° | 25,1 | 69,5 | 31,7 |
| V | 25° | 87,6 | 72,6 | 64,9 |
| | 45° | 51,1 | 72,3 | 44,3 |
| | 70° | 27,9 | 68,9 | 30,1 |

## Patentansprüche

1. Glanzpigmente auf Basis metalloxidbeschichteter Aluminiumplättchen, bei denen die als Substrat dienenden Aluminiumplättchen einen Gesamtkohlenstoffgehalt < 0,1 Gew.-% haben.

2. Glanzpigmente nach Anspruch 1, bei denen die Aluminiumplättchen
A) mit einer ersten, im wesentlichen aus Eisenoxid bestehenden Schicht und
B) gewünschtenfalls mit einer zweiten, im wesentlichen aus farblosen Metalloxiden bestehenden Schicht
belegt sind.

3. Verfahren zur Herstellung der Glanzpigmente gemäß Anspruch 1 oder 2, dadurch gekennzeichnet, daß man
a) die als Substrat dienenden, auf herkömmliche Weise hergestellten Aluminiumplättchen zur Senkung ihres Gesamtkohlenstoffgehalts unter 0,1 Gew.-% unter Bewegung mit einem sauerstoffhaltigen Gas und gewünschtenfalls zusätzlich mit Wasserdampf bei erhöhter Temperatur behandelt und
b) die so erhaltenen Aluminiumplättchen auf übliche Weise durch Gasphasenzersetzung flüchtiger Metallverbindungen mit Sauerstoff und/oder Wasserdampf mit Metalloxid beschichtet.

4. Verfahren nach Anspruch 3, dadurch gekennzeichnet, daß die sauerstoffhaltigen Gase in Schritt a) 1 bis 5 Vol.-% Sauerstoff enthalten.

5. Verfahren nach Anspruch 3 oder 4, dadurch gekennzeichnet, daß man in Schritt a) als sauerstoffhaltige Gase Luft/Stickstoff-Gemische einsetzt.

6. Verfahren nach den Ansprüchen 3 bis 5, dadurch gekennzeichnet, daß man dem sauerstoffhaltigen Gas in Schritt a) zur zusätzlichen Wasserdampfbehandlung 0,5 bis 3 Vol.-% Wasserdampf zusetzt.

7. Verfahren nach den Ansprüchen 3 bis 6, dadurch gekennzeichnet, daß man die Aluminiumplättchen in Schritt a) zunächst nur mit dem sauerstoffhaltigen Gas und anschließend zusätzlich mit dem wasserdampfhaltigen Gas behandelt.

8. Verfahren nach den Ansprüchen 3 bis 7, dadurch gekennzeichnet, daß man die Behandlung der Aluminiumplättchen in Schritt a) bei 150 bis 270°C durchführt.

9. Verfahren nach den Ansprüchen 3 bis 8, dadurch gekennzeichnet, daß man es in einem Wirbelschichtreaktor durchführt.

10. Verwendung der Glanzpigmente gemäß Anspruch 1 oder 2, zur Einfärbung von Lacken, Druckfarben, Kunststoffen, Gläsern, keramischen Produkten und Zubereitungen der dekorativen Kosmetik.

11. Aluminiumplättchen mit einem Gesamtkohlenstoffgehalt < 0,1 Gew.-%, erhältlich durch Behandlung der auf herkömmliche Weise hergestellten Aluminiumplättchen gemäß dem in den Ansprüchen 3 bis 9 definierten Verfahrensschritt a).

## Claims

1. Luster pigments based on metal oxide-coated aluminum platelets wherein the substrate aluminum platelets have a total carbon content of <0.1% by weight.

2. Luster pigments as claimed in claim 1 wherein the aluminum platelets have been coated
A) with a first coat consisting essentially of iron oxide, and
B) if desired with a second coat consisting essentially of a colorless metal oxide.

3. A process for preparing the luster pigments of claim 1 or 2, which comprises
a) treating the conventionally prepared substrate aluminum platelets under agitation with an oxygen-containing gas and if desired additionally with steam at elevated temperature to reduce their total carbon content to below 0.1% by weight, and
b) coating the resulting aluminum platelets with a metal oxide in a conventional manner by gas phase decomposition of volatile metal compounds using oxygen and/or steam.

4. A process as claimed in claim 3, wherein the oxygen-containing gas of step a) contains from 1 to 5% by volume of oxygen.

5. A process as claimed in claim 3 or 4, wherein the oxygen-containing gas of step a) is an air/nitrogen mixture.

6. A process as claimed in any of claims 3 to 5, wherein the oxygen-containing gas of step a) has added to it for an additional water vapor treatment from 0.5 to 3% by volume of water vapor.

7. A process as claimed in any of claims 3 to 6, wherein, in step a), the aluminum platelets are treated initially with the oxygen-containing gas only and subsequently additionally with the water vapor-containing gas.

8. A process as claimed in any of claims 3 to 7, wherein the step a) treatment of the aluminum platelets is carried out at from 150 bis 270°C.

9. A process as claimed in any of claims 3 to 8, carried out in a fluidized bed reactor.

10. The use of the luster pigments of claim 1 or 2 for coloring paints, printing inks, plastics, glasses, ceramic products and decorative cosmetic preparations.

11. Aluminum platelets having a total carbon content of <0.1%by weight, obtainable by treating the conventionally prepared aluminum platelets as per the process step a) defined in any of claims 3 to 9.

## Revendications

1. Pigments brillants à base de paillettes d'aluminium revêtues d'oxyde métallique, dans lesquels les paillettes d'aluminium servant de substrat ont une teneur totale en carbone inférieure à 0,1% en poids.

2. Pigments brillants selon la revendication 1, dans lesquels les paillettes d'aluminium sont revêtues
A) d'une première couche composée essentiellement d'oxyde de fer et
B) si on le désire, d'une seconde couche composée essentiellement d'oxydes métalliques incolores.

3. Procédé de préparation des pigments brillants selon la revendication 1 ou 2, caractérisé en ce que
a) pour abaisser à moins de 0,1% en poids la teneur totale en carbone de paillettes d'aluminium préparées de manière classique et servant de substrat, on traite ces paillettes mises en mouvement, à température élevée, par un gaz contenant de l'oxygène et en plus, si on le désire, par de la vapeur d'eau, et
b) on revêt d'oxyde de métal les paillettes d'aluminium ainsi obtenues, de la manière habituelle par décomposition en phase gazeuse de composés métalliques volatils avec de l'oxygène et/ou de la vapeur d'eau.

4. Procédé selon la revendication 3, caractérisé en ce que les gaz contenant de l'oxygène dans l'étape a) contiennent de 1 à 5% en volume d'oxygène.

5. Procédé selon la revendication 3 ou 4, caractérisé en ce que l'on utilise dans l'étape a), comme gaz contenant de l'oxygène, des mélanges air/azote.

6. Procédé selon l'une quelconque des revendications 3 à 5, caractérisé en ce que, dans l'étape a), on ajoute 0,5 à 3% en volume de vapeur d'eau au gaz contenant de l'oxygène, en vue du traitement supplémentaire par la vapeur d'eau.

7. Procédé selon l'une quelconque des revendications 3 à 6, caractérisé en ce que, dans l'étape a), on commence par ne traiter les paillettes d'aluminium que par le gaz contenant de l'oxygène, puis on les traite en plus par le gaz contenant de la vapeur d'eau.

8. Procédé selon l'une quelconque des revendications 3 à 7, caractérisé en ce que, dans l'étape a), on effectue le traitement des paillettes d'aluminium à une température de 150 à 270°C.

9. Procédé selon l'une quelconque des revendications 3 à 8, caractérisé en ce qu'on l'exécute dans un réacteur à lit fluidisé.

10. Utilisation des pigments brillants selon la revendication 1 ou 2 pour la coloration de laques, d'encres d'imprimerie, de matières plastiques, de verres, de produits céramiques et de préparations de la cosmétique décorative.

11. Paillettes d'aluminium ayant une teneur totale en carbone inférieure à 0,1% en poids, obtenues en soumettant les paillettes d'aluminium, préparées de manière classique, au traitement selon l'étape opératoire a> définie dans les revendications 3 à 9.
